# EUROPÄISCHE PATENTSCHRIFT

(11) **EP 2 756 505 B1**
(45) Veröffentlichungstag und Bekanntmachung des Hinweises auf die Patenterteilung: **01.02.2017**
(21) Anmeldenummer: 12795727.2
(22) Anmeldetag: 17.09.2012
(51) Int. Cl.: H01F 7/16, H01F 7/08

(54) **HUB-ZUGMAGNET, VERWENDUNG EINES HUB-ZUGMAGNETEN UND BREMS- ODER KLEMMEINRICHTUNG FÜR LINEAR BEWEGTE UND/ODER AXIAL ROTIERENDE BAUTEILE**
SOLENOID ACTUATOR, USE OF A SOLENOID ACTUATOR AND BRAKING OR CLAMPING DEVICE FOR LINEARLY MOVING AND/OR AXIALLY ROTATING COMPONENTS
ÉLECTRO-AIMANT DE LEVAGE-TRACTION, UTILISATION D'UN ÉLECTRO-AIMANT DE LEVAGE-TRACTION ET DISPOSITIF DE FREINAGE OU DE SERRAGE POUR DES PIÈCES À DÉPLACEMENT LINÉAIRE ET/OU À ROTATION AXIALE

(30) Priorität: 17.09.2011 DE 102011113411
(43) Veröffentlichungstag der Anmeldung: 23.07.2014
(73) Patentinhaber: Bischoff Technologie-Management GmbH, 39418 Staßfurt (DE)
(72) Erfinder: POLACK, Hans-Joachim, 39418 Staßfurt - Ortsteil Neundorf (DE); BISCHOFF, Hartmut, 39418 Staßfurt (DE)
(74) Vertreter: Patentanwälte Schuster, Müller & Partner mbB
(86) Internationale Anmeldenummer: PCT/DE2012/000917
(87) Internationale Veröffentlichungsnummer: WO 2013/037354

(56) Entgegenhaltungen:
- EP-A2- 0 326 966
- DE-A1-102005 026 415
- DE-A1-102005 037 193

## Beschreibung

### Stand der Technik

Die Erfindung geht aus von einem Hub-Zugmagneten nach der Gattung des Anspruchs 1, der Verwendung eines Hub-Zugmagneten nach der Gattung des Anspruchs 6 sowie einer Brems- oder Klemmeinrichtung für linear bewegte und/oder axial rotierende Bauteile nach der Gattung des Anspruchs 8.

Bekannt sind Sicherheitssysteme zum Bremsen und/oder Klemmen von linear bewegten und/oder axial rotierenden Bauteilen, beispielsweise Seilen und Stangen, wie sie u. a. von der Fa. Chr. Mayr GmbH & Co. KG angeboten werden. Diese unter dem Namen ROBA-linearstop angebotenen Sicherheitsbremsen werden, wie auch alle anderen weltweit auf dem Markt angebotenen Klemm- oder Bremssysteme, hydraulisch und pneumatisch angetrieben. Nachteilig ist hierbei, dass die hierfür benötigten Medien erst bereitgestellt werden müssen, während Elektroenergie an den Einsatzorten der Klemm- und Bremssysteme in der Regel vorhanden und zudem billiger ist als hydraulisch oder pneumatisch erzeugte Druckenergie. Zu den hohen Bereitstellungskosten kommen noch jene Kosten hinzu, die durch die absolut dichte Auslegung der Systeme vor Ort zur Gewährleistung der Sicherheitsanforderungen, die an derartige Sicherheitsbremsen gestellt werden, bedingt sind. Nachteilig ist außerdem der hohe Wartungsaufwand, den insbesondere hydraulische Anlagen durch den regelmäßig vorzunehmenden Ölwechsel erfordern. Während der Wartungszeiten des Bremssystems steht die gesamte Anlage, in die das Wartungssystem integriert ist, still.

Diese Nachteile können von Brems- und Klemmeinrichtungen, die als Stellorgan einen elektrisch betriebenen Hub-Zugmagneten aufweisen, überwunden werden. Mit Haftmagneten lassen sich sehr hohe Haltekräfte erzeugen. Nachteilig dabei ist, dass die Anker der Haftmagnete nicht in der Lage sind, größere Luftspalte zu überwinden. In der Regel beträgt der maximale Luftspalt ca. 1 mm. Damit können sie auch keine größeren Stellwege zurücklegen bzw. überbrücken.

Mit Hubmagneten können relativ große Luftspalte überwunden werden. Bei konventionellen Hub- oder Zugmagneten befindet sich in ihrer axialen Mitte ein Hubanker, der von einer Ankerspindel geführt wird (DE 74 06 334 U; DE 28 43 593; DE 195 37 656 A1). Um jedoch größere Kräfte zu realisieren, muss auch die Bauform des Magneten dementsprechend groß ausgelegt werden. Das hat wiederum den Nachteil, dass sie einen großen Bauraum benötigen, der beispielsweise bei Brems- oder Klemmeinrichtungen für linear bewegte und/oder axial rotierende Bauteile bzw. mechanischen Prozessen nicht zur Verfügung steht Dokument DE 10 2005 026415 offenbart ein Hubmagnet laut den Oberbegriff des Anspruchs 1.

### Die Erfindung und ihre Vorteile

Der erfindungsgemäße Hub-Zugmagnet mit dem kennzeichnenden Merkmal des Anspruchs 1 hat demgegenüber den Vorteil, dass er bei hohen Anzugs- und Haltekräften lange Schaltwege sowie eine kleine Bauweise ermöglicht. Dadurch ist er besonders zur Betätigung von Brems- und Klemmtechnik von Stangen und Seilen geeignet.

Das wird dadurch erreicht, dass der Magnetanker ein axial geführter Ringmagnetanker ist und die Mittel zur Kraftübertragung koaxial um die Hubachse des Ringmagnetankers angeordnet sind. Daraus resultiert auch seine bis zu 100 % höhere Haltekraft. Unter dem Begriff Ringmagnetanker ist nicht nur ein in der Draufsicht kreisringförmiger Magnetanker zu verstehen. Vielmehr bezeichnet hier die Silbe "Ring" jede mögliche geschlossene Form eines Polygons.

Nach einer vorteilhaften Ausgestaltung der Erfindung ist der Magnetanker als Flachanker mit einer im Vergleich zu seiner Höhe wesentlich größeren Breite seiner ringförmigen Halte- und Klebefläche ausgebildet. Die flachere Gestaltung des Ankers lässt eine insgesamt flachere Bauform des Hub-Zugmagneten zu. Durch die Kombination zweier Magnetsysteme ist eine völlig neue Magnetform entstanden, die höhere Ansprüche erfüllt und universell einsetzbar ist.

Die hohen Anzugs- und Haltekräfte des Flachankermagneten beruhen auf einer exakt ermittelten Magnetflussberechnung sowie einer für diese Magnetkonstruktion neu entwickelte Ansteuerelektronik, die es ermöglicht, im Millisekundenbereich eine mehr als hundertfache Übererregung im Magneten zu erzeugen und somit auch überproportional hohe Anzugskräfte zu realisieren. Weiterhin hat sich herausgestellt, dass die neue Magnetform auch in allen anderen Anwendungsfällen einsetzbar ist, also überall da, wo hohe Anzugs- und Haltekräfte erforderlich sind.

Die erfindungsgemäße Brems- oder Klemmeinrichtung für linear bewegte und/oder axial rotierende Bauteile mit den Merkmalen des Anspruchs 8 hat gegenüber hydraulisch oder pneumatisch betriebenen Bremssystemen den Vorteil, dass sie schneller und energiesparender arbeitet und quasi wartungsfrei ist. Zudem ist sie aufgrund des geringeren gerätetechnischen Aufwandes sowohl für die Bereitstellung des Energieträgers als auch für den Hub-Zugmagneten in ihrer Herstellung kostengünstiger. Dies wird durch die Verwendung eines Hub-Zugmagneten als Stellantrieb für das Bremssystem erreicht, dessen Magnetanker ein axial geführter Ringmagnetanker ist und bei dem die Mittel zur Kraftübertragung konzentrisch um die Hubachse des Ringmagnetankers angeordnet sind. Dabei kann von dem Hub-Zugmagneten sowohl der Brems- oder Klemmvorgang ausgelöst als auch eine in Wirkung befindliche Bremse gelüftet werden. In letzterem Fall wirkt der Hub-Zugmagnet als Lüfteinrichtung für stromloses Bremsen und/oder Klemmen von Stangen, Wellen oder Seilen mit ähnlich guten Parametern wie es eine hydraulische oder pneumatische Lüfteinrichtung ermöglicht.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und werden im Folgenden näher erläutert. Es zeigen:
- Fig. 1: den Grundaufbau eines erfindungsgemäßen Hub-Zugmagneten,
- Fig. 2: eine zweite Anwendung des Hub-Zugmagneten,
- Fig. 3: eine dritte Anwendung des Hub-Zugmagneten,
- Fig. 4: einen Hub-Zugmagneten mit einer Bremseinrichtung und
- Fig. 5: die Anordnung eines Bremssystems innerhalb eines Hub-Zugmagneten.

### Beschreibung des Ausführungsbeispiels

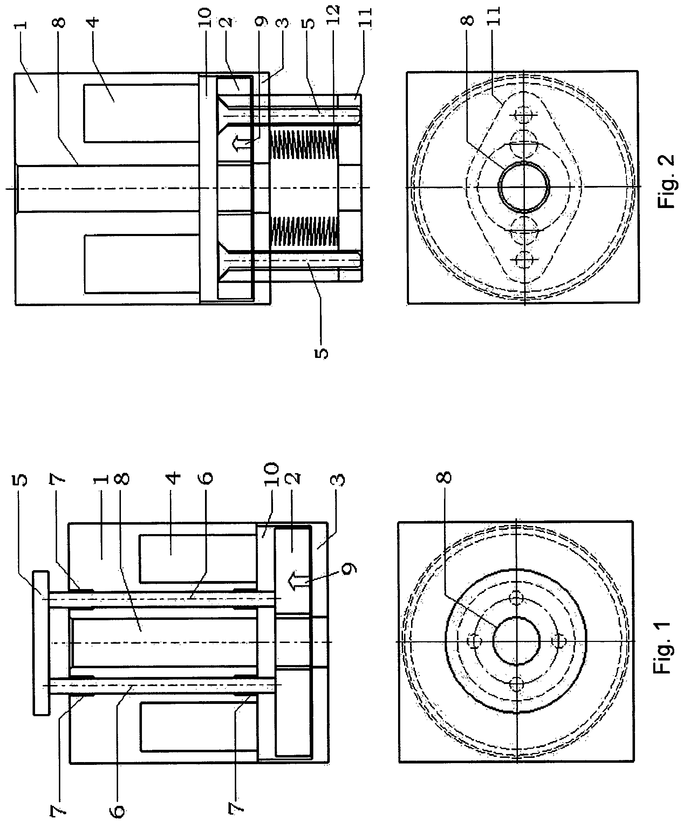

Fig. 1 zeigt einen erfindungsgemäßen Hub-Zugmagneten, bestehend aus einem Magnetkörper 1, der das Magnetgehäuse bildet. In dessen unterem Bereich befindet sich ein Ringmagnetanker 2. Magnetkörper 1 und Ringmagnetanker 2 sind durch einen Magnetdeckel 3 verschlossen. In dem Magnetkörper 1 ist konzentrisch um die als strich-punktierte Linie dargestellte Hubachse des Ringmagnetankers 2 ein Spulenraum 4 zur Aufnahme von elektrischen Spulen vorgesehen. Zur Kraftübertragung auf ein Stellmittel 5 sind in den Ringmagnetanker konzentrisch zu dessen Hubachse vier Sackbohrungen eingebracht (siehe Draufsicht), in die jeweils ein Druckbolzen 6 lose eingesetzt ist. An ihrem jeweils freien, aus dem Magnetkörper 1 herausragendem Ende sind die Druckbolzen 6 mit dem Stellmittel 5, das im vorliegenden Beispiel eine Druckplatte ist, verbunden.

Jeweils im Bereich des Ein- und Austritts in den bzw. aus dem Magnetkörper 1 sind die Druckbolzen 6 in dem Magnetkörper 1 in Aufnahmen 7 geführt. Dadurch sowie die mechanisch entkoppelte Befestigung der Führungsbolzen 6 in dem Ringmagnetanker 2 kann dieser, exakt linear geführt von den Druckbolzen 6, seine Arbeit immer parallel zur Ankergegenfläche ausüben.

Der Grundaufbau des in den Fig. 1 und 2 dargestellten Hubzug-Magneten ist der eines Topfmagneten als Hub oder Zugmagnet mit einer axialen Durchgangsbohrung 8, die sich ebenso im Ringmagnetanker 2 als auch im Magnetdeckel 3 befindet. Der Arbeitshubweg des Ringmagnetankers 2 ist mit einem Pfeil 9 gekennzeichnet. Der Luftspalt zwischen dem Magnetkörper 1 und dem Ringmagnetanker 2 wurde mit der Bezugszahl 10 bezeichnet. Durch die oben genannten Durchgangsbohrungen 8 kann entweder eine Stange, Welle oder ein Seil geführt werden. Die Arbeitsflächen des Ringmagnetankers 2 und des Ankergegenstücks im Magnetkörper 1 sind durch Dichtungen vor äußeren Einflüssen geschützt. Die Form des Magnetkörpers 1 kann dabei von unterschiedlicher geometrischer Form sein. Ein solcher Hub-Zugmagnet kann für diverse Schaltfunktionen, die hohe Schub- und/oder Haltekräfte erfordern, eingesetzt werden.

Die in Fig. 2 dargestellte zweite Ausführung zeigt einen Hub-Zugmagneten ebenfalls mit einer durch diesen hindurchgehenden Durchgangsbohrung 8, bei dem als Stellmittel 5 zwei Druckstifte durch den Ringmagnetanker 2 sowie den Magnetdeckel 3 hindurchgeführt und über eine Flanschplatte 11 miteinander verbunden sind. Zwischen der Flanschplatte 11 und dem Magnetdeckel 3 sind Federpakete 12 angeordnet, die einen hier nicht dargestellten Betätigungsmechanismus, beispielsweise einen Bremsmechanismus für Stangen, Wellen oder Seile, betätigen.

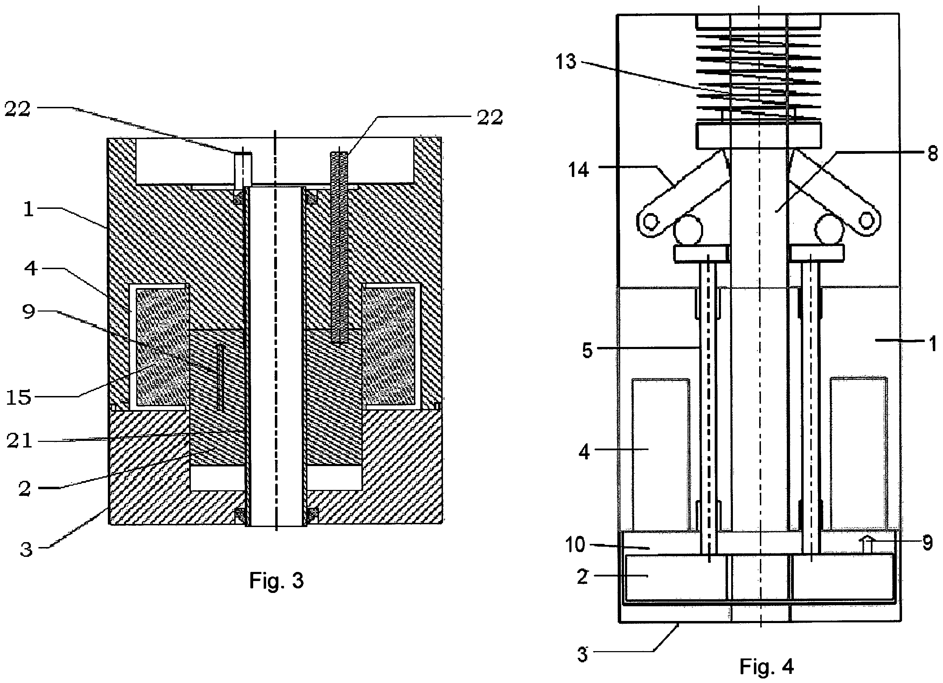

Fig. 3 zeigt eine dritte Ausführung des erfindungsgemäßen Hub-Zugmagneten in Schnittdarstellung, dessen Ringankermagnet 2 eine zylindrische Langform mit Mittelbohrung aufweist. Am unteren Ende des Hub-Zugmagneten ist der Magnetdeckel 3 mittels Schrauben an dessen Gehäuse befestigt. Die Bauteile, die den bei der Beschreibung der Fig. 1 und 2 genannten Teile entsprechen, wurden mit den gleichen Bezugszahlen versehen. Durch den gesamten Hub-Zugmagneten führt eine Lagerhülse 21, die zum einen den Magneten vor Schmutz und Feuchtigkeit schützt und zum andern als Führung für den frei beweglichen Ringankermagneten 2 dient, der zu diesem Zweck in seiner Mittelbohrung eine Gleitlagerbuchse aufweist. In den oberen Bereich des Magnetkörpers 1 sind konzentrisch zu der Hubachse des Ringankermagneten 2 Bohrungen eingebracht, die Druckstifte 22 aufnehmen, die mit ihrem einen Ende lose in Sackbohrungen des Ringankermagneten 2 sitzen und mit ihrem freien, aus dem Magnetkörper 1 herausragendem Ende auf eine hier nicht dargestellte Druckfeder wirken, die für den Ringankermagneten 2 als Rückholfeder dient.

Fig. 4 zeigt einen Schnitt durch eine mit einem erfindungsgemäßen Hub-Zugmagneten versehene Bremseinrichtung, die z.B. als eine Stangenklemmung oder -bremse oder als Seilbremse ausgeführt sein kann. Die Bauteile, die den bei der Beschreibung der Fig. 1 bis 3 genannten Teile entsprechen, wurden mit den gleichen Bezugszahlen versehen.

Bei einer solchen Anwendung ist es erforderlich, dass das zu bremsende oder das zu klemmende Teil (Stange, Welle oder Seil) durch das Bremselement geführt wird. Die Bremskraft selbst wird in dieser Ausführung durch eine Druckfeder 13 erzeugt. Als Lüftungseinrichtung für die Druckfeder 13 steht der erfindungsgemäße Hub-Zugmagnet mit seinen in den Fig. 1 und 2 beschriebenen Bauteilen zur Verfügung. Damit der Hub-Zugmagnet die Kraft zentral auf die Druckfeder 13 wirken lassen kann, ist es erforderlich, dass die Stange, Welle oder das Seil auch durch den Hub-Zugmagnet geführt wird. Um eine Stange, Welle oder ein Seil mit relativ geringem Durchmesser bremsen oder klemmen zu können, sind von einem Klemmelement 14 sehr große Klemmkräfte erforderlich. Das Klemmelement 14 wird entweder durch ein hier nicht näher dargestelltes Hebelsystem oder ein Keilgetriebe betätigt. Damit hier große Kräfte wirksam werden können, muss deren Stellantrieb auch einen großen Weg zurücklegen können. Mit dem erfindungsgemäßen Hub-Zugmagneten sind Arbeitshübe von 6 bis zu 10 mm möglich.

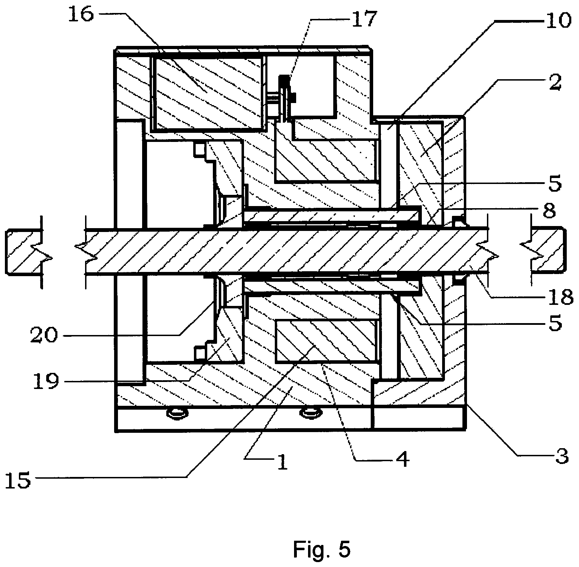

Schließlich ist in Fig. 5 ein Schnitt durch ein mit einem erfindungsgemäßen Hub-Zugmagneten versehenes Bremssystem dargestellt, dessen Betätigungsmittel sich innerhalb des Hub-Zugmagneten befinden. Die Bauteile, die den bei der Beschreibung der Fig. 1 und 2 genannten Teile entsprechen, wurden mit den gleichen Bezugszahlen versehen. Zusätzlich zu den bereits benannten Bauteilen zeigt diese Darstellung die Anordnung einer Ringspule 15 in dem Spulenraum 4 des Hub-Zugmagneten. Innerhalb des Magnetkörpers 1 ist auch die Schaltelektronik 16 mit dem elektrischen Anschluss 17 untergebracht. Eine Stange 18 ist innerhalb der Durchgangsbohrung 8 durch den Hub-Zugmagneten hindurchgeführt. Die mit dem Magnetanker 2 verbundenen Stellmittel 5 sind mit ihrem anderen Ende an eine Druckplatte 19 angelenkt, die wiederum mit einem konzentrisch um die Stange 18 angeordneten Klemmteil 20 in Wirkverbindung steht.

### Bezugszahlenliste

- 1: Magnetkörper
- 2: Ringmagnetanker
- 3: Magnetdeckel
- 4: Spulenraum
- 5: Stellmittel
- 6: Druckbolzen
- 7: Aufnahmen
- 8: Durchgangsbohrung
- 9: Arbeitshubweg
- 10: Luftspalt
- 11: Flanschplatte
- 12: Federpaket
- 13: Druckfeder
- 14: Klemmelement
- 15: Ringspule
- 16: Schaltelektronik
- 17: Elektrischer Anschluss
- 18: Stange
- 19: Druckplatte
- 20: Klemmteil
- 21: Lagerhülse
- 22: Druckstifte

## Patentansprüche

1. Hub-Zugmagnet, bestehend aus einem Magnetkörper (1), einem Magnetanker, einem den Hubraum des Magnetankers verschließenden Deckel (3), mindestens einer elektrischen Spule (4), die in dem Magnetkörper (1) konzentrisch um die Hubachse des Magnetankers angeordnet ist, und Mitteln (5) zur Kraftübertragung, die mit dem Magnetanker in Wirkverbindung stehen und aus dem Hub-Zugmagneten herausragen, wobei der Magnetanker des Hub-Zugmagneten ein axial geführter Ringmagnetanker (2) ist, **dadurch gekennzeichnet, dass** die Mittel (5) zur Kraftübertragung konzentrisch um die Hubachse des Ringmagnetankers (2) angeordnet sind.

2. Hub-Zugmagnet nach Anspruch 1,
**dadurch gekennzeichnet,**
**dass** der Ringmagnetanker (2) als Flachanker mit einer im Vergleich zu seiner Höhe wesentlich größeren Breite seiner ringförmigen Halte- und Klebefläche ausgebildet ist.

3. Hub-Zugmagnet nach Anspruch 1 oder 2,
**dadurch gekennzeichnet,**
**dass** der Magnetkörper (1), der Ringmagnetanker (2) und der Magnetdeckel (3) eine zentrale Durchgangsöffnung (8) aufweisen, deren Achse der Hubachse entspricht.

4. Hub-Zugmagnet nach Anspruch 1, 2 oder 3,
**dadurch gekennzeichnet,**
**dass** die Mittel (5) zur Kraftübertragung mit ihrem freien Ende mit einer Brems- oder Klemmeinrichtung für linear bewegte und/oder axial rotierende Bauteile in Wirkverbindung stehen.

5. Hub-Zugmagnet nach Anspruch 4,
**dadurch gekennzeichnet,**
**dass** der Magnetkörper (1), der Ringmagnetanker (2) und der Magnetdeckel (3) eine zentrale Durchgangsöffnung (8) aufweisen, deren Achse der Hubachse entspricht und die linear bewegten und/oder axial rotierenden Bauteile in diese Durchgangsöffnung (8) zumindest hineinragen.

6. Verwendung eines Hub- Zugmagneten, bestehend aus einem Magnetkörper (1), einem Magnetanker, einen den Hubraum des Magnetankers verschließenden Deckel (3), elektrischen Spulen (4), die in dem Magnetkörper (1) konzentrisch um die Hubachse des Magnetankers angeordnet sind, und Mitteln (5) zur Kraftübertragung, die mit dem Magnetanker in Wirkverbindung stehen und aus dem Hub-Zugmagnet herausragen,
**dadurch gekennzeichnet,**
**dass** der Magnetanker des Hub-Zugmagneten ein axial geführter Ringmagnetanker (2) ist, die Mittel (5) zur Kraftübertragung des Hub- und Zugmagneten konzentrisch um die Hubachse des Ringmagnetankers (2) angeordnet sind und ein solcher Hub-Zugmagnet zur Betätigung einer Brems- oder Klemmeinrichtung für linear bewegte und/oder axial rotierende Bauteile verwendet wird, die konzentrisch um die Achse der linear bewegten und/oder axial rotierenden Bauteile
angeordnete Betätigungsmittel aufweist, die mit den Mitteln (5) zur Kraftübertragung des Hub-Zugmagneten in Wirkverbindung stehen.

7. Verwendung des Hub- Zugmagneten nach Anspruch 6,
**dadurch gekennzeichnet,**
**dass** der Ringmagnetanker (2) des Hub-Zugmagneten als Flachanker mit einer im Vergleich zu seiner Höhe wesentlich
größeren Breite seiner ringförmigen Halte- und Klebefläche ausgebildet ist und ein solcher Hub-Zugmagnet zur Betätigung einer Brems- oder Klemmeinrichtung für linear bewegte und/oder axial rotierende Bauteile verwendet wird.

8. Brems- oder Klemmeinrichtung für linear bewegte und/oder axial rotierende Bauteile, beispielsweise Seile, Stangen, Wellen u. ä., bestehend aus die Bauteile konzentrisch umgebenden Brems- oder Klemmbacken, diese betätigende Stellelemente und einem Stellantrieb,
**dadurch gekennzeichnet,**
**dass** der Stellantrieb aus einem Hub- Zugmagneten nach Anspruch 1 besteht.

9. Brems- oder Klemmeinrichtung nach Anspruch 8,
**dadurch gekennzeichnet,**
**dass** der Ringmagnetanker (2) des Hub-Zugmagnets als Flachanker mit einer im
Vergleich zu seiner Höhe wesentlich größeren Breite seiner ringförmigen Halte- und Klebefläche ausgebildet ist.

10. Brems- oder Klemmeinrichtung nach Anspruch 8 oder 9,
**dadurch gekennzeichnet,**
**dass** der Hub-Zugmagnet die linear bewegten und/oder axial rotierenden Bauteile koaxial umgibt.

## Claims

1. Solenoid actuator consisting of a magnet body (1), a magnet armature, a cover (3) closing off the lifting space of the magnet armature, at least one electrical coil (4) that is disposed concentrically in the magnet body (1) around the lifting axis of the magnet armature and means (5) for power transmission that are in operative connection with the magnet armature and project out of the solenoid actuator whereby the magnet armature of the solenoid actuator is an axially guided ring magnet armature (2),
**characterised in**
**that** the means (5) for power transmission are disposed concentrically around the lifting axis of the ring magnet armature (2).

2. Solenoid actuator in accordance with Claim 1,
**characterised in**
**that** the ring magnet armature (2) is formed as a flat armature with a considerably larger width of annular retaining and adhesive surface compared to the armature's height.

3. Solenoid actuator in accordance with Claim 1 or 2,
**characterised in**
**that** the magnet body (1), the ring magnet armature (2) and the magnet cover (3) have a central through hole (8), the axis of which corresponds with the lifting axis.

4. Solenoid actuator in accordance with Claim 1, 2 or 3,
**characterised in**
**that** the means (5) for power transmission with their free end are in operative connection with a braking or clamping device for linearly moving and/or axially rotating components.

5. Solenoid actuator in accordance with Claim 4,
**characterised in**
**that** the magnet body (1), the ring magnet armature (2) and the magnet cover (3) have a central through hole (8), the axis of which corresponds with the lifting axis and the linearly moving and/or rotating components project at least into this through hole (8).

6. Use of a solenoid actuator consisting of a magnet body (1), a magnet armature, a cover (3) closing the lifting space of the magnet armature, electrical coils (4) that are disposed in the magnet armature (1) concentrically around the lifting axis of the magnet armature, and means (5) for power transmission that are in operative connection with the magnet armature and project out of the solenoid actuator,
**characterised in**
**that** the magnet armature of the solenoid actuator is an axially guided ring magnet armature (2), the means (5) for power transmission of the solenoid actuator are disposed concentrically around the lifting axis of the ring magnet armature (2) and a solenoid actuator like this is used for actuating a braking or clamping device for linearly moving and/or axially rotating components that has means of actuation disposed concentrically around the axis of the linearly moving and/or axially rotating components that are in operative connection with the means (5) for power transmission of the solenoid actuator.

7. Use of the solenoid actuator in accordance with Claim 6,
**characterised in**
**that** the ring magnet armature (2) of the solenoid actuator is formed as a flat armature with a considerably larger width of annular retaining and adhesive surface compared to the armature's height and a solenoid actuator like this is used for actuating a braking or clamping device for linearly moving and/or axially rotating components.

8. Braking or clamping device for linearly moving and/or axially rotating components, for example ropes, rods, shaft etc., consisting of braking or clamping jaws, disposed concentrically around the components, these actuating elements and an actuating drive,
**characterised in,**
**that** the actuating drive consists of a solenoid actuator in accordance with Claim 1.

9. Braking or clamping device in accordance with Claim 8,
**characterised in**
**that** the ring magnet armature (2) of the solenoid actuator is formed as a flat armature with a considerably larger width of annular retaining and adhesive surface compared to the armature's height.

10. Braking or clamping device in accordance with Claim 8 or 9,
**characterised in**
**that** the solenoid actuator is disposed coaxially around the linearly moving and/or axially rotating components.

## Revendications

1. Electroaimant de levage, composé d'un corps magnétique (1), d'une armature magnétique, d'un couvercle obturant la capacité de l'armature magnétique (3), au moins d'une bobine électrique (4) qui est disposée concentriquement autour de l'axe de levage de l'armature magnétique dans le corps magnétique (1) et de moyens (5) pour la transmission d'effort, qui sont en liaison active avec l'armature magnétique et qui dépassent de l'électroaimant de levage, l'armature magnétique de l'électroaimant de levage étant une armature magnétique annulaire à guidage axial (2),
**caractérisé par le fait**
**que** les moyens (5) pour la transmission d'effort sont disposés concentriquement autour de l'axe de levage de l'armature magnétique annulaire (2).

2. Electroaimant de levage conformément à la revendication n°1,
**caractérisé par le fait**
**que** l'armature magnétique annulaire (2) est formée, en tant qu'armature plate, d'une largeur de sa surface de retenue et de collage annulaire, notablement plus grande par rapport à sa hauteur.

3. Electroaimant de levage conformément à la revendication n°1 ou n°2,
**caractérisé par le fait**
**que** le corps magnétique (1), l'armature magnétique annulaire (2) et le couvercle magnétique (3) présentent une ouverture de passage centrale (8), dont l'axe correspond à l'axe de levage.

4. Electroaimant de levage conformément à la revendication n°1, n°2 ou n°3,
**caractérisé par le fait**
**que** les moyens (5) pour la transmission d'effort avec leur extrémité libre sont en liaison active avec un dispositif de freinage ou de serrage pour des pièces à déplacement linéaire et/ou à rotation axiale.

5. Electroaimant de levage conformément à la revendication n°4,
**caractérisé par le fait**
**que** le corps magnétique (1), l'armature magnétique annulaire (2) et le couvercle magnétique (3) présentent une ouverture de passage centrale (8), dont l'axe correspond à l'axe de levage et que les pièces à déplacement linéaire et/ou à rotation axiale entrent au moins dans cette ouverture de passage (8).

6. Utilisation d'un électroaimant de levage, composé d'un corps magnétique (1), d'une armature magnétique, d'un couvercle obturant la capacité de l'armature magnétique (3), de bobines électriques (4) qui sont disposées concentriquement autour de l'axe de levage de l'armature magnétique dans le corps magnétique (1) et de moyens (5) pour la transmission d'effort qui sont en liaison active avec l'armature magnétique et qui dépassent de l'électroaimant de levage,
**caractérisé par le fait**
**que** l'armature magnétique de l'électroaimant de levage est une armature magnétique annulaire à guidage axial (2), que les moyens (5) pour la transmission d'effort de l'aimant de levage et électroaimant sont disposés concentriquement autour de l'axe de levage de l'armature magnétique annulaire (2) et qu'un tel électroaimant de levage est utilisé pour l'actionnement d'un dispositif de freinage ou de serrage pour des pièces à déplacement linéaire et/ou à rotation axiale, présentant des moyens d'actionnement disposés concentriquement autour de l'axe des pièces à déplacement linéaire et/ou à rotation axiale, qui sont en liaison active avec les moyens (5) pour la transmission d'effort de l'électroaimant de levage.

7. Utilisation de l'électroaimant de levage conformément à la revendication n°6,
**caractérisé par le fait**
**que** l'armature magnétique annulaire (2) de l'électroaimant de levage est formée, en tant qu'armature plate, d'une largeur de sa surface de retenue et de collage annulaire, notablement plus grande par rapport à sa hauteur et qu'un tel électroaimant de levage est utilisé pour l'actionnement d'un dispositif de freinage ou de serrage pour des pièces à déplacement linéaire et/ou à rotation axiale.

8. Dispositif de freinage ou de serrage pour pièces à déplacement linéaire et/ou à rotation axiale, par exemple câbles, barres, arbres, etc., composé de mâchoires de freinage ou de serrage entourant concentriquement les pièces, ces éléments de réglage actionneurs et d'un servomoteur,
**caractérisé par le fait**
**que** le servomoteur se compose d'un électroaimant de levage conformément à la revendication n° 1.

9. Dispositif de freinage ou de serrage conformément à la revendication n°8,
**caractérisé par le fait**
**que** l'armature magnétique annulaire (2) de l'électroaimant de levage est formée, en tant qu'armature plate, d'une largeur de sa surface de retenue et de collage annulaire, notablement plus grande par rapport à sa hauteur.

10. Dispositif de freinage ou de serrage conformément à la revendication n°8 ou n°9,
**caractérisé par le fait**
**que** l'électroaimant de levage entoure coaxialement les pièces à déplacement linéaire et/ou à rotation axiale.
